# EUROPEAN PATENT APPLICATION

(11) **EP 2 581 509 A2**
(43) Date of publication of application: **17.04.2013**
(21) Application number: 12188438.1
(22) Date of filing: 12.10.2012
(51) Int. Cl.: E04B 1/61, E04B 1/26, F16B 5/07

(54) **Connection apparatus**

(30) Priority: 14.10.2011 GB 201117777
(71) Applicant: SIMPSON STRONG-TIE COMPANY, INC., Pleasanton, CA 94588 (US)
(72) Inventor: Guerin, Xavier, 85400 Luçon (FR)
(74) Representative: Widdowson, Nicholas Edward

(57) **Abstract**

A connection apparatus comprising a first bracket and a second bracket. The first bracket comprises a plate extending substantially in a plane, the plate having a first direction in the plane, a second direction in the plane, the second direction being perpendicular to the first direction, and a thickness which is orthogonal to the plane. The plate comprises: (a) a flange extending in the plane substantially in the first direction; (b) first and second outer fingers extending from the flange in the plane substantially in the second direction; and (c) an inner finger which projects from the flange with a major component of direction in the second direction parallel with and between the first and second outer fingers and with a minor component of direction extending out of the plane. The inner finger is separated from the first outer finger by a first slot in the second direction and from the second outer finger by a second slot in the second direction. The second bracket has first and second co-planar flanges, an outer member in a plane substantially parallel to the plane of the co-planar flanges, and first and second spaced-apart members. The first spaced-apart member connects the first co-planar flange to one side of the outer member and the second spaced-apart member connects the second co-planar flange to a second side of the outer member, such as to provide a receiving portion in a region defined within the first and second flanges, the outer member and the first and second spaced-apart members. The first spaced-apart member of the second bracket comprises a third slot and the second spaced-apart member of the second bracket comprises a fourth slot: The first and second slots of the first bracket are configured to receive the first and second spaced-apart members of the second bracket and the third and fourth slots of the second bracket are configured to receive the flange of the first bracket. In use, sliding of the first bracket with respect to the second bracket in a direction such that the plate of the first bracket slides in a plane parallel to the plane of the co-planar flanges of the second bracket causes the inner finger of the first bracket to be received by the receiving portion of the second bracket such that (a) the first and second spaced-apart members of the second bracket are received into the first and second slots of the first bracket and (b) the flange of the first bracket is received into the third and fourth slots of the second bracket.

## Description

The invention relates to the field of connectors, particularly those used in the construction industry for the connection of prefabricated panels.

In recent years there has been increased interest in off site prefabrication of buildings and building components which are then simply assembled on site. For example, a building may be formed of a number of panels manufactured in a factory. Such an approach is more efficient than traditional construction methods for a number of reasons. In particular, there is greater scope for automation in a factory than on a construction site. Moreover, accuracy and tolerances are likely to be better in a factory environment. This allows for increased use of off-the-shelf rather than bespoke components. Furthermore, the period of time spent on site assembling prefabricated panels is much less than if using conventional building techniques.

One of the problems associated with buildings constructed from prefabricated panels is the means of connecting the panels on site. Connectors need to be simple to use as well as provide a strong connection of the panels. Minimum gaps between panels are desirable both for strength and for improved thermal properties.

Known connectors generally consist of a plug and socket arrangement, wherein the plug is located in or on an end surface of a first panel and the corresponding socket is located on an end surface of a second panel. That the connectors are located on the end surfaces gives rise (a) to gaps between the panels, which are undesirable and/or (b) to difficulty in aligning the connectors since, once the panels are close together, the connectors are difficult to see.

Against this background there is provided a connection apparatus comprising
a first bracket comprising a plate extending substantially in a plane, the plate having a first direction in the plane, a second direction in the plane, the second direction being perpendicular to the first direction, and a thickness which is orthogonal to the plane, the plate comprising:
(a) a flange extending in the plane substantially in the first direction;
(b) first and second outer fingers extending from the flange in the plane substantially in the second direction; and
(c) an inner finger which projects from the flange with a major component of direction in the second direction parallel with and between the first and second outer fingers and with a minor component of direction extending out of the plane;
   wherein
the inner finger is separated from the first outer finger by a first slot in the second direction and from the second outer finger by a second slot in the second direction;
a second bracket having first and second co-planar flanges, an outer member in a plane substantially parallel to the plane of the co-planar flanges, and first and second spaced-apart members, the first spaced-apart member connecting the first co-planar flange to one side of the outer member and the second spaced-apart member connecting the second co-planar flange to a second side of the outer member, such as to provide a receiving portion in a region defined within the first and second flanges, the outer member and the first and second spaced-apart members, wherein the first spaced-apart member of the second bracket comprises a third slot and the second spaced-apart member of the second bracket comprises a fourth slot;
wherein the first and second slots of the first bracket are configured to receive the first and second spaced-apart members of the second bracket and the third and fourth slots of the second bracket are configured to receive the flange of the first bracket, and wherein, in use, sliding of the first bracket with respect to the second bracket in a direction such that the plate of the first bracket slides in a plane parallel to the plane of the co-planar flanges of the second bracket causes the inner finger of the first bracket to be received by the receiving portion of the second bracket and further such that (a) the first and second spaced-apart members of the second bracket are received into the first and second slots of the first bracket and (b) the flange of the first bracket is received into the third and fourth slots of the second bracket.

This connection apparatus overcomes the problems associated with the prior art as described above. In particular, it allows a first bracket to be mounted to a first member, and a second bracket to be mounted to a second member, the brackets being configured to cooperate in such a manner so as to draw the brackets (and hence the members) together in a direction which is largely orthogonal to the plate of the first bracket and the co-planar flanges of the second bracket, when the brackets are moved relative to one another in a direction which is largely parallel to the plate of the first bracket and the co-planar flanges of the second bracket. Thus, when the first and second brackets first make contact, the members are relatively further apart and hence the brackets are visible between the members. By contrast, when the connection is complete the members are flush and the brackets not visible.

Furthermore, by mounting the first bracket over a recess of the first member and mounting the second bracket in a recess of the second member, then no part of either the first bracket or the second bracket need prevent intimate contact between the first member and the second member. This in turn means that the connection apparatus provides for an intimate connection between the first and second members which increases structural integrity of the joint and reduces heat loss through the joint.

Preferably, the third slot is wider at an open end of the third slot than at a blind end of the third slot and the fourth slot is wider at an open end of the fourth slot than at a blind end of the fourth slot. This means that imperfect initial alignment of the first and second brackets before sliding together does not preclude the cooperation of the first and second brackets. Also, since the width of each slot narrows towards its blind end, as the first and second brackets slide with respect to one another, the first bracket and the second bracket are not only urged together but also the alignment of the first bracket with the second bracket is improved with the sliding until they come to rest.

Preferred embodiments of the disclosure will now be described, by way of example only, with reference to the accompanying figures, in which:
Figure 1a shows a perspective view of a first bracket according to the connection apparatus of the present disclosure;
Figure 1b shows the bracket of Figure 1a looking down on the plane;
Figure 1c shows a side view of the bracket of Figure 1a;
Figure 1d shows an end view of the bracket of Figure 1a;
Figure 2a shows a perspective view of a second bracket according to the disclosure;
Figure 2b shows the bracket of Figure 2a view looking down on the plane of co-planar flanges,
Figure 2c shows a side view of the bracket of Figure 2a;
Figure 2d shows an end view of the bracket of Figure 2a;
Figure 3 shows both the first and second brackets wherein Figure 3a shows the brackets spaced-apart from one another but aligned in preparation for connection; Figure 3b shows the first bracket partly received by the second bracket and Figure 3c shows the first bracket fully received by the second bracket;
Figure 4a is similar to Figure 3a but shows the arrangement where the second bracket is attached to a second member;
Figure 4b is equivalent to Figure 3c but, as with Figure 4a, is shown with a second bracket as shown attached to a second member;
Figure 5a is equivalent to Figure 3a but wherein the first bracket is shown attached to a first member;
Figure 5b is equivalent to Figure 3c but wherein the first bracket is shown attached to a first member;
Figure 6a shows the starting positions of the first and second members (to which first and second brackets respectively are connected) before the first and second brackets are connected;
Figure 6b shows the ending positions of the first and second members once the first and second brackets are connected;
Figure 7a is similar to Figure 5a but shows the second bracket a further distance from the first bracket in a direction orthogonal to the plane of the first bracket;
Figure 7b shows the view of Figure 7a from the side;
Figure 8a shows a similar view to that of Figure 7a but wherein the first and second brackets have been moved in a direction of the plane of the first bracket;
Figure 8b shows the same view as Figure 8a but from the side which illustrates that the first and second members are closer together;
Figure 9a shows a similar view to Figures 7a and 8a wherein the first and second brackets are fully connected;
Figure 9b shows the same view as Figure 9a from the side which illustrates the two members in intimate contact along their length
Figure 10a shows a variation of the first bracket illustrated in Figure 1a which includes two spacer members such that the flange sits away from a surface to which the first bracket may be attached in use;
Figure 10b shows the bracket of Figure 10a looking down on the plane;
Figure 10c shows a side view of the bracket of Figure 10a; and
Figure 10d shows an end view of the bracket of Figure 10a.

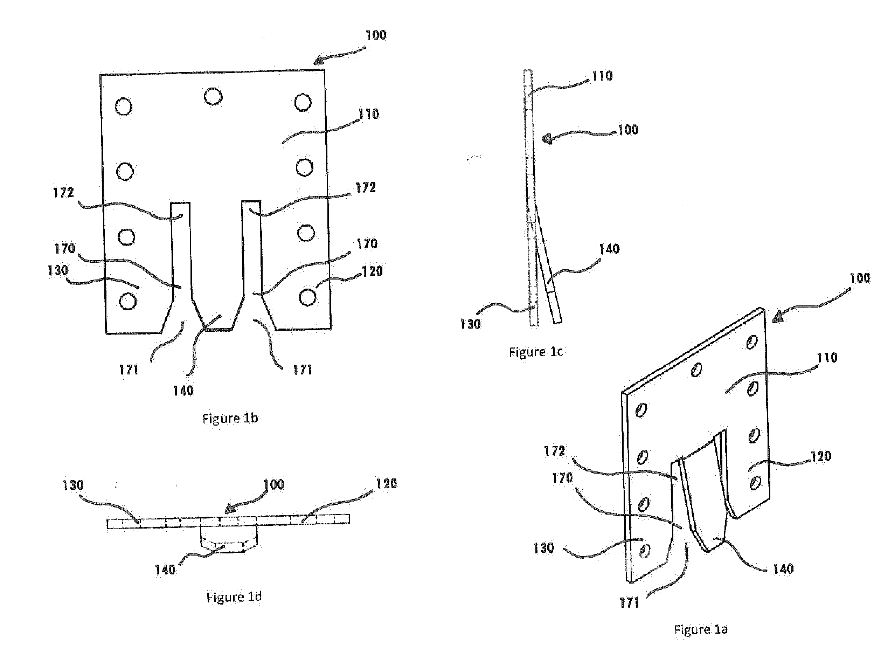

Figures 1a to 1d illustrate a first bracket 100 in accordance with an embodiment of the present disclosure. The first bracket 100 comprises a U-shaped plate which is planar and comprises holes suitable for receiving fastening members (such as screws) for fastening the plate to a member 1000 (not shown). The U-shaped plate comprises a flange 110 (forming a base of the U) and first and second outer fingers 120, 130 (forming the sides of the U). Part of the interior space defined by the U-shape is occupied by an inner finger 140. The inner finger 140 is attached to the plate at the flange 110 and has a major component of direction parallel with the first and second outer fingers and a minor component of direction extending out of the plane so as to provide a ramped structure. When viewed from above (i.e. looking down on the plane of the plate) the combination of the flange 110 the two outer fingers 120, 130 and the inner finger 140 is similar in appearance to a letter W. This is because when looking down on the plane of the plate, there is a slot between the first outer finger 120 and the inner finger 140 and a second slot between the second outer finger 130 and the inner finger 140. The slots 170 each have an open end 171 and a blind end 172. While much of each slot is of constant width along its length when viewed from above (see Figure 1b), the slots 170 are wider at their open ends 171.

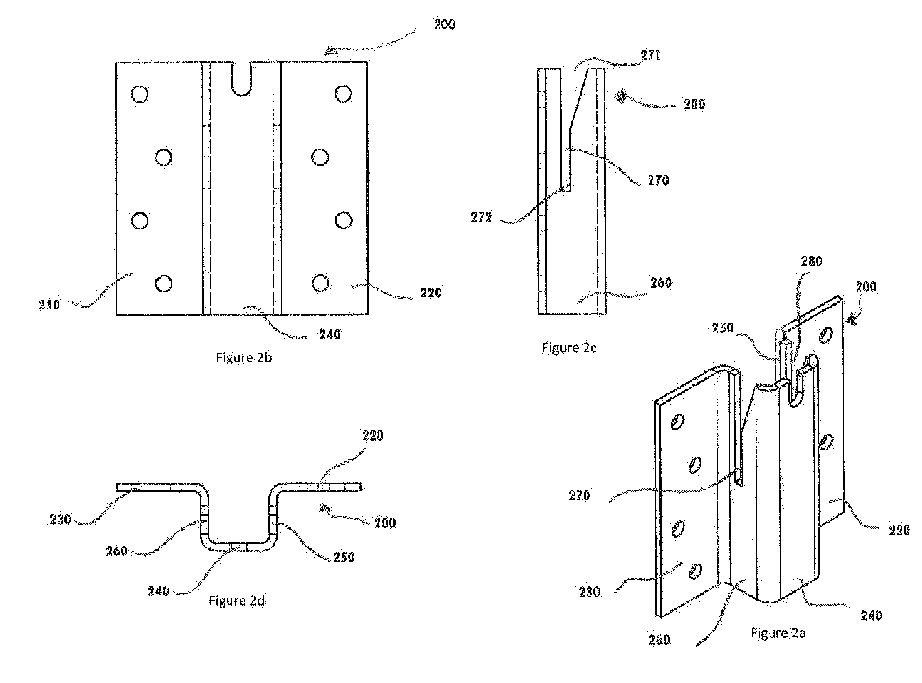

Figures 2a to 2d illustrate a second bracket 200 in accordance with the disclosure. The second bracket 200 comprises a first co-planar flange 220 and a second co-planar flange 230 which each include holes suitable for fastening the flanges to a second member using fastening members (e.g. screws). The second bracket 200 further comprises an outer member 240 which is substantially parallel to the plane of the co-planar flanges but spaced therefrom. A first spaced-apart member 250 connects the first co-planar flange 220 to a first side of the outer member 240 and a second spaced-apart member 260 connects the second co-planar flange 230 to a second side of the outer member 240. When viewed from the end, the bracket 200 has the appearance of a plate with a recessed channel therein (see Figure 2d).

While in the specific embodiment the spaced-apart members 250, 260 are substantially perpendicular to the co-planar flanges 220, 230 and the outer member 240, this is not necessary for the invention. In particular, while the examples illustrated in the Figures show the spaced-apart members 250, 260 to be substantially perpendicular to the co-planar flanges 220, 230 and to the outer flange 240, other (non-perpendicular) angles fall within the scope of the invention. Similarly, while the co-planar flanges 220, 230 are shown to be parallel to the outer flange 240, other (non parallel) arrangements fall within the scope of the invention.

Furthermore, since it is envisaged that the bracket 200 will be formed from a single bent metal plate, it is the case that there is a radius of curvature between the first co-planar flange 220 and the first spaced-apart member 250 and between the first spaced-apart member 250 and the outer member 240 and between the outer member 240 and the second spaced-apart member 260 and between the second spaced-apart member 260 and the second co-planar flange 230.

The second bracket 200 further comprises a pair of slots 270, one slot 270 per spaced-apart member 250, 260. As with the slots 170 of the first bracket 100, the slots 270 have an open end 271 and a blind end 272. The open end 271 is wider than the blind end 272. In particular, the open end 271 begins broadly and narrows to a channel of consistent width down to the blind end 272. The open end 271 is wider only to one side as can be seen using Figure 2c. In particular, the slot 270 widens towards the outer member 240 but not towards the co-planar flanges 220, 230.

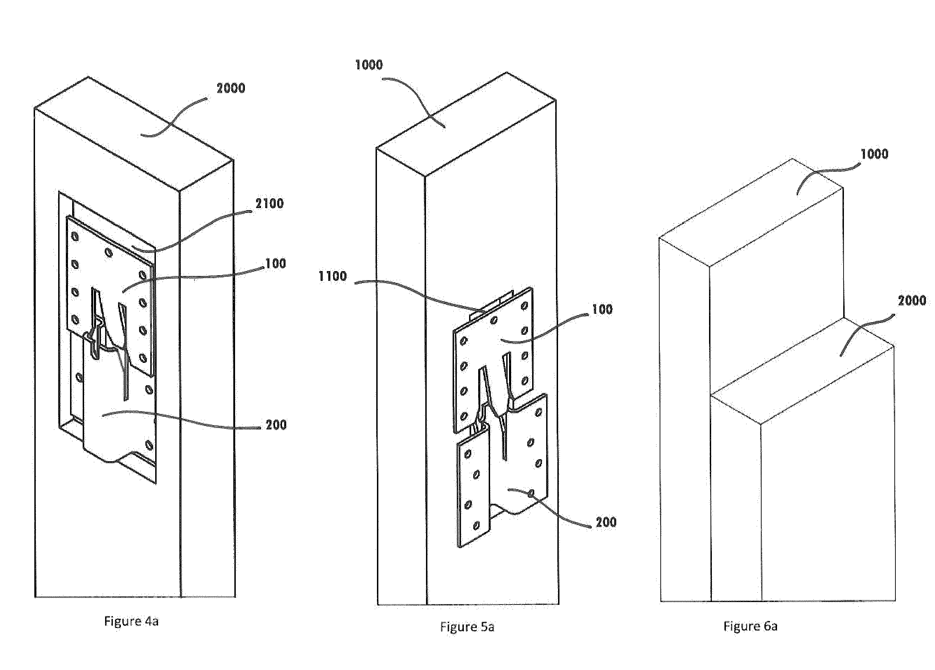

In use, the first and second brackets 100, 200 are used to connect first and second members 1000, 2000, respectively. Each of the first and second members 1000, 2000 is provided with a recess 1100, 2100. Figure 4a shows a second bracket 200 mounted to a second member 2000 within the recess 2100 which is the same width as the width of the bracket 200. It also shows a first bracket 100 not connected to a first member. Figure 5a shows the first bracket 100 connected to the first member 1000. In this case, the width of the recess 1100 is narrower than the width of the first bracket 100 but sufficiently wide as to allow the outer member 240 of the second bracket 200 to pass into the recess 1100. Figure 5a shows the second bracket 200 absent the second member 2000. Figure 6a shows the relative positions of first and second members 1000, 2000 when at the start of the process to connect the two brackets 100, 200.

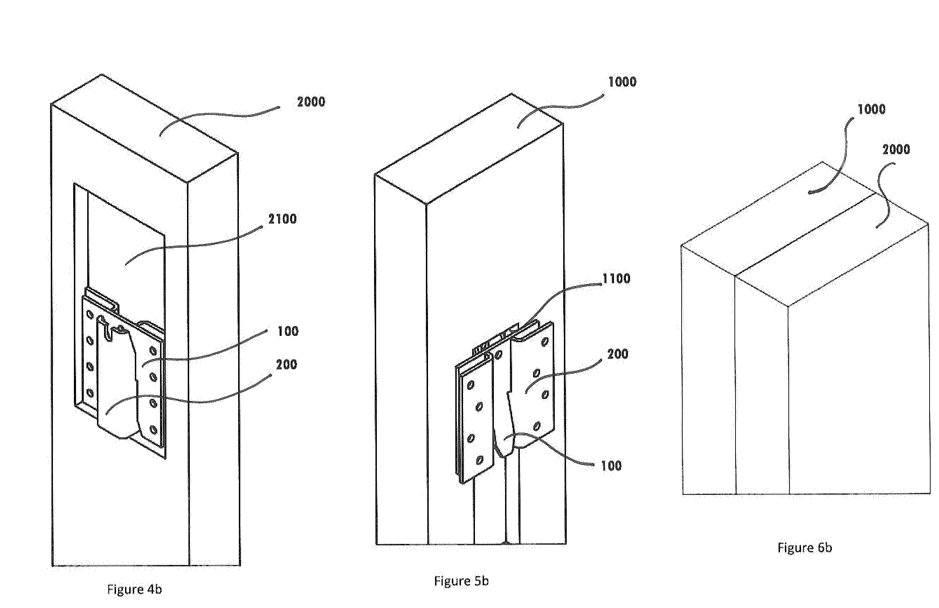

Figure 4b shows the same as Figure 4a except that the first bracket 100 is moved relative to the second bracket 200. In fact, the second bracket 200 is now connected to the first bracket 100 by virtue of the slots 170 in the first bracket having received a first and second spaced-apart portions 250, 260 of the second bracket 200 therein. Furthermore, the slots 270 of the second bracket 200 have received therein the flange 110 of the first bracket 100. As such, the first and second brackets 100, 200 (and hence the first and second members 1000, 2000) are tightly attached as illustrated in Figure 6b. Figure 5b shows the same situation as Figure 4b but showing the first bracket 100 attached to a first member 1000 and the second bracket 200 in the absence of the second member 2000.

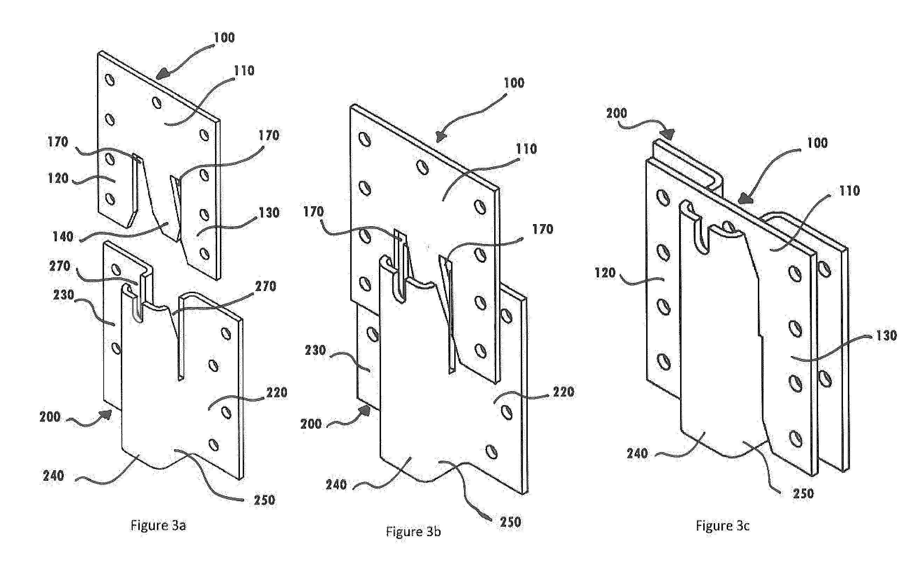

Figures 3a to 3c show first and second brackets 100, 200 in the absence of first and second members 1000, 2000 progressing towards connection. In Figure 3a the first bracket 100 is aligned above the second bracket 200 with no connection or contact made. As the first bracket 100 moves down relative to the second bracket 200, the inner finger 140 is received into an opening defined by the region within the outer member 240 and the first and second spaced-apart members 250, 260 of the second bracket 200. While at this point there is no connection provided between the brackets 100, 200, the relative positions of the features ensure correct alignment of the first and second brackets 100, 200. The Figure 3c shows first and second brackets 100, 200 in a fully connected position. The slots 170 of the first bracket 100 have received the full width of the first and second spaced-apart members 250, 260 while the slots 270 of the second bracket 200 have received the full width of the flange 110 of the first bracket 100. As such, a tight connection is made between the two brackets 100, 200 and there is little scope for movement of one bracket with respect to the other unless the first bracket 100 is moved directly vertically by (i.e. in the plane of the flange 110) with respect to co-planar flanges 220, 230 of the second bracket 200.

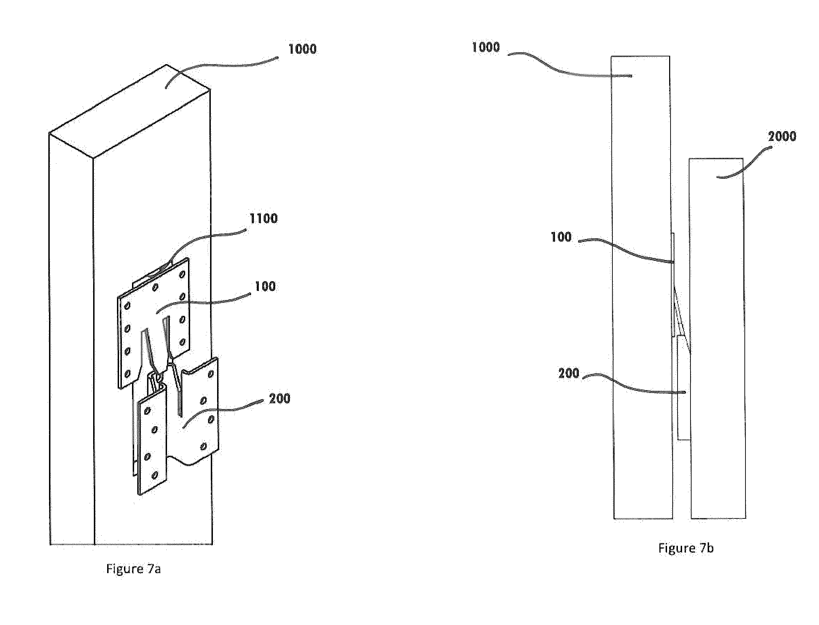

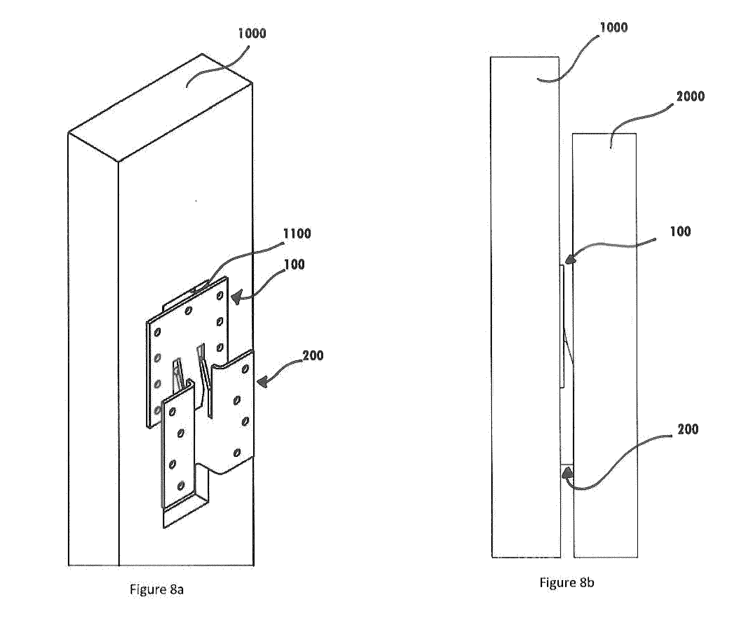

Figure 7a shows the same as Figure 5a while adjacent Figure 7b is the side-on view of Figure 7a and including the second member 2000 to which the second bracket 200 is attached. This shows initial alignment of the two brackets 100, 200 and the two members 1000, 2000. As can be seen, there is at this point a gap between the first and second members 1000, 2000 which allows the user to view the relative positions of the first and second brackets 100, 200 in order that the inner finger 140 of the first bracket 100 can be positioned directly above the cavity defined within the outer member 240, the first and second spaced-apart members 250, 260 and a floor of the recess 2100 in the second member 2000. As the first member 1000 is moved vertically downwards relative to the second member 2000, the relative position is shown in Figure 8a and 8b. Figure 8b clearly shows that members 1000 and 2000 are drawn together by the action of vertical movement of the member 1000 causing the ramped inner finger 140 to be drawn into said recess. The gap between the first member 1000 and the second member 2000 is smaller than that shown in Figure 7b.

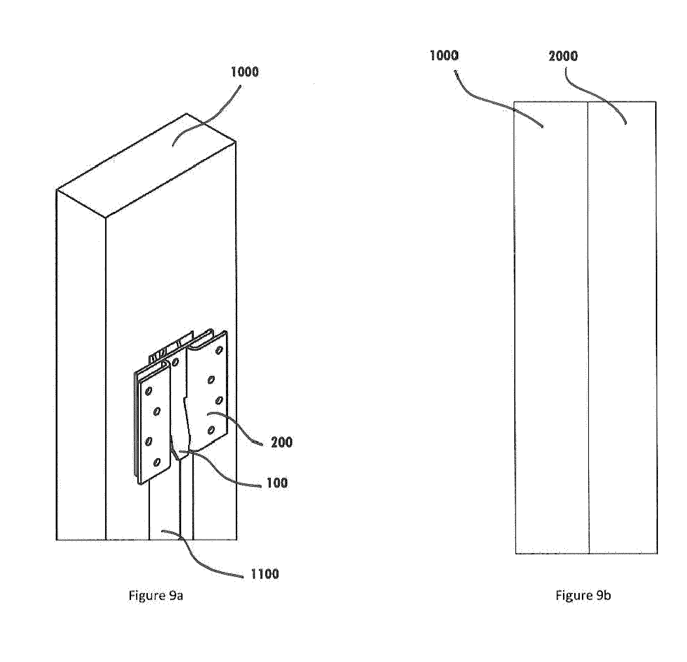

Figures 9a and 9b show the same situation but wherein the first member 1000 is moved fully down to its resting position with respect to the second member 2000. At this point, members 1000 and 2000 are in intimate contact with each other and the brackets are entirely hidden within the two members 1000, 2000 within the recesses 1100, 2100.

While Figures 9a and 9b show the brackets 100, 200 such that the inner surface of blind end 172 of the first and second slots 170 of the first bracket 100 are in contact with the inner surface of the blind end 272 of the third and fourth slots 270, respectively, of the second bracket 200, this is not necessary. In particular, there are significant advantages associated with arranging the brackets such that the inner surfaces of the blind ends 172 of the first and second slots 170 come to rest short of the inner surfaces of the blind ends 272 of the third and fourth slots 270. In other words, the inner surface of the blind end 172 of the first slot 170 does not contact directly with the inner surface of the blind end 272 of the third slot 270. Similarly, the inner surface of the blind end 172 of the second slot 170 does not contact directly with the inner surface of the blind end 272 of the fourth slot 270. This is because such an arrangement avoids the brackets 100, 200 taking vertical load (i.e. load down a plane parallel to the plane of the co-planar flanges 220, 230 of the second bracket 200). This is achieved either by having the slots 170, 270 longer than shown in Figures 9a and 9b, for example, or by offsetting the first and second brackets 100, 200 from one another when positioned on the first and second members 1000, 2000. This means that, in use, the brackets 100, 200 hold the members 1000, 2000 together in a horizontal direction and draw them together when moved in the vertical direction with respect to each other. Further, once the brackets 100, 200 are joined, they do not take vertical load. Rather, it is intended that vertical load be taken by whatever structure or structures rest below the members 1000, 2000. This is particularly important since, without such an arrangement, and in view of the possibility of mounting the brackets 100, 200 on the members in a non-ideal position, it is conceivable that a single pair of first and second brackets 100, 200 would have to take the entire vertical load of a member. This would exert unnecessary stresses and strains on the bracket which would be undesirable.

In the specific embodiment illustrated in the Figures 1 to 9, recesses of 12 millimetres in depth are required. Of course, by changing the relative dimensions of the first and second brackets 100, 200, recesses 1100, 2100 of different depths may be necessary. An advantage provided by the invention is that the thickness of the members 1000, 2000 is not relevant other than they must be thicker than the depth of the required recess so as to allow a recess of appropriate depth to be formed. As such, the brackets 100, 200 are not specific to a single thickness of member. They may therefore be used in different jurisdictions where a range of different member thicknesses may be commonplace.

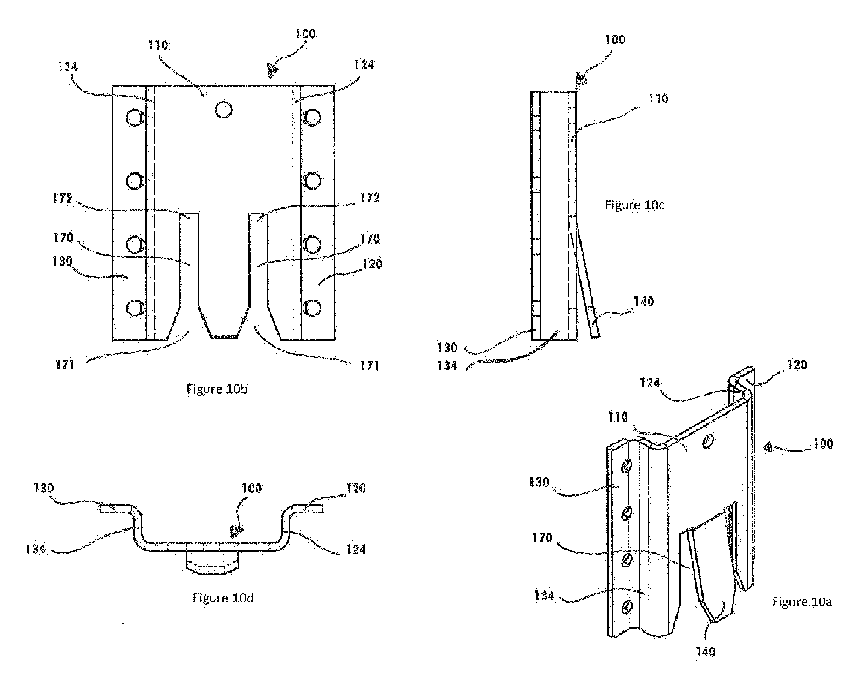

A variation on the first bracket is illustrated in Figure 10a to Figure 10d. This embodiment of the first bracket further comprises a first spacer member 124 and a second spacer member 134. The spacer members ensure that the flange sits away from a surface to which the first bracket may be attached in use. The first spacer member 124 comprises a portion 125 projecting from the plane of the flange 110 and a first fixing plate 126 having a first fixing surface 127 in a plane parallel to the flange 110. Similarly, the second spacer member 134 comprises a portion 135 projecting from the plane of the flange 110 and a second fixing plate 136 having a second fixing surface 137 in a plane parallel to the flange 110. An advantage of this variation is that no recess is required in the first member 1000 since the gap into which a part of the second member is received is instead present above the surface of the first member 1000. Of course, other arrangements of spacer member 124, 134 would be possible and fall within the scope of the claims.

In all of the illustrated embodiments, the inner finger 140 is raised from the plane by 10 millimetres. This allows the two members 1000, 2000 to be as much as 10 millimetres apart when the finger 140 is first received by the cavity within the second bracket 200. Of course, different dimensions may be chosen. By selecting a deeper recess or recesses and differently dimensioned brackets 100, 200 it will be possible to allow for the brackets 100, 200 to be further apart when the finger 140 of the first bracket 100 is first received into the second bracket 200.

Once a connection between the two brackets 100, 200 has been established, there is a strong resistance to detachment. Furthermore, since the first and second members 1000, 2000, are in intimate contact with one another there is little scope for leverage which means that the only realistic method of detaching first and second members 1000, 2000 is by moving the first member 1000 vertically upwards with respect to the second member 2000. Furthermore, another advantage is that by virtue of the blind ends of the first, second, third and fourth slots 170, 270 there is a positive end point to the connection between the first and second brackets 100, 200.

Ideally, a thickness of each of the first and second spaced apart members of the second bracket is substantially the same as a width of each of the first and second slots of the first bracket and a thickness of the flange of the first bracket is substantially the same as a narrowest width of each of the third and fourth slots of the second bracket. However, in practice, when using three first brackets along the length of a first member and three corresponding second brackets along the length of a second member, if the slots and thicknesses were substantially the same then the tolerances required when positioning the three first and corresponding brackets would be very high. Therefore, it is likely that the slots are configured to be slightly larger than the thicknesses which they are configured to receive in order to allow for small inaccuracies when positioning brackets. Of course, a greater difference between the slot and corresponding thickness which it is configured to receive, would likely result in a weaker resulting joint between first and second member. As such, a careful balance must be made between the need for flexibility to overcome errors of tolerance and the need for a strong connection between the two brackets.

Other advantages of the connection apparatus include the invisible nature of the connection apparatus once the members 1000, 2000 are attached. Also, a relatively small number of fasteners are required for fastening each bracket 100, 200 to its respective member 1000, 2000. Furthermore, the brackets 100, 200 and corresponding recess 2100 or recesses 1100, 2100 may be pre-manufactured before arrival on site which enables reduced installation time due to a simple connection. Another advantage is the fact that the brackets may be used on any thickness of timber so long as it is sufficiently thick to allow for the production of an appropriately dimensioned recess, where necessary. Finally, the symmetrical shape of the system means that there is no preferential rotation in one direction by comparison with an opposite direction of the first member with respect to the second member.

Each feature disclosed in this specification (including the accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features. In addition, all of the features disclosed in this specification (including the accompanying claims, abstract and drawings), and/or all of the steps of any method or process so disclosed, may be combined in any combination, except combinations where at least some of such features and/or steps are mutually exclusive. Accordingly, while different embodiments of the present invention have been described above, any one or more or all of the features described, illustrated and/or claimed in the appended claims may be used in isolation or in various combinations in any embodiment. As such, any one or more feature may be removed from, substituted and/or added to any of the feature combinations described, illustrated and/or claimed. For the avoidance of doubt, any one or more of the features of any embodiment may be combined and/or used separately in a different embodiment with any other feature or features from any of the embodiments.

Whilst preferred embodiments of the present invention have been described above and illustrated in the drawings, these are by way of example only and non-limiting. It will be appreciated by those skilled in the art that many alternatives are possible within the ambit of the invention. For example, the installation may take many different forms. The number of units in the installation may be increased, and their relative positions varied. Indeed, each installation may be offset vertically or horizontally with respect to one another. As such, the true scope of the invention is that as set out in the appended claims.

It should also be appreciated that use of the terms vertical and horizontal are in the context of the illustrated embodiments. Use of these terms should not be taken to mean that the connection apparatus is only useable in one (or a specific limited number) of orientations. Rather, the apparatus may be used in any orientation. Vertical and horizontal are thus used as relative rather than absolute terms.

## Claims

1. A connection apparatus comprising:
a first bracket comprising a plate extending substantially in a plane, the plate having a first direction in the plane, a second direction in the plane, the second direction being perpendicular to the first direction, and a thickness which is orthogonal to the plane, the plate comprising:
(a) a flange extending in the plane substantially in the first direction;
(b) first and second outer fingers extending from the flange in the plane substantially in the second direction; and
(c) an inner finger which projects from the flange with a major component of direction in the second direction parallel with and between the first and second outer fingers and with a minor component of direction extending out of the plane; wherein
the inner finger is separated from the first outer finger by a first slot in the second direction and from the second outer finger by a second slot in the second direction;
a second bracket having first and second co-planar flanges, an outer member in a plane substantially parallel to the plane of the co-planar flanges, and first and second spaced-apart members, the first spaced-apart member connecting the first co-planar flange to one side of the outer member and the second spaced-apart member connecting the second co-planar flange to a second side of the outer member, such as to provide a receiving portion in a region defined within the first and second flanges, the outer member and the first and second spaced-apart members, wherein the first spaced-apart member of the second bracket comprises a third slot and the second spaced-apart member of the second bracket comprises a fourth slot;
wherein the first and second slots of the first bracket are configured to receive the first and second spaced-apart members of the second bracket and the third and fourth slots of the second bracket are configured to receive the flange of the first bracket,
and wherein, in use, sliding of the first bracket with respect to the second bracket in a direction such that the plate of the first bracket slides in a plane parallel to the plane of the co-planar flanges of the second bracket causes the inner finger of the first bracket to be received by the receiving portion of the second bracket and further such that (a) the first and second spaced-apart members of the second bracket are received into the first and second slots of the first bracket and (b) the flange of the first bracket is received into the third and fourth slots of the second bracket.

2. The connection apparatus of claim 1 wherein the first and second slots are substantially parallel.

3. The connection apparatus of claim 1 or claim 2 wherein the third and fourth slots are substantially parallel.

4. The connection apparatus of any preceding claim wherein:
a thickness of each of the first and second spaced apart members of the second bracket is substantially the same as a width of each of the first and second slots of the first bracket; and
a thickness of the flange of the first bracket is substantially the same as a narrowest width of each of the third and fourth slots of the second bracket.

5. The connection apparatus of any preceding claim wherein:
the third slot is wider at an opening of the third slot than at a blind end of the third slot; and
the fourth slot is wider at an opening of the fourth slot than at a blind end of the fourth slot.

6. The connection apparatus of any preceding claim wherein the first bracket further comprises a first spacer member connected to the first finger and a second spacer member connected to the second finger, the first and second spacer members being configured to prevent the flange of the first bracket being positioned flush against a member to which it may be attached in use so as to provide a gap between the flange and the member to which it may be attached in use, wherein the gap is configured to accommodate at least a part of the second bracket.

7. The connection apparatus of claim 6 wherein:
the first spacer member comprises (i) a portion projecting from the plane of the flange and (ii) a first fixing plate having a first fixing surface in a plane parallel to the flange and wherein
the second spacer member comprises (ii) a portion projecting from the plane of the flange and (ii) a second fixing plate having a second fixing surface in a plane parallel to the flange.

8. The connection apparatus of any preceding claim wherein the first slot is shorter than the third slot and the second slot is shorter than the fourth slot such that in a configuration wherein (a) the first and second spaced-apart members of the second bracket are received into the first and second slots of the first bracket and (b) the flange of the first bracket is received into the third and fourth slots of the second bracket, a blind end of the first slot is at a distance from a blind end of the third slot and a blind end of the second slot is at a distance from a blind end of the fourth slot.

9. The connection apparatus of any preceding claim wherein the first bracket further comprises one or more holes in one or more of the first flange, the first outer finger, the second outer finger, the first fixing plate and the second fixing plate, each of the one or more holes suitable for receiving one or more fastening devices for fastening the first bracket to a first member.

10. The connection apparatus of any preceding claim wherein the second bracket further comprises one or more holes in each of the co-planar flanges, each of the one or more holes suitable for receiving one or more fastening devices for fastening the second bracket to a second member.
